# FASCICULE DE BREVET EUROPEEN

(11) **EP 2 514 645 B1**
(45) Date de publication et mention de la délivrance du brevet: **14.09.2016**
(21) Numéro de dépôt: 12305437.1
(22) Date de dépôt: 13.04.2012
(51) Int. Cl.: B60T 1/10, B60W 30/18

(54) **Dispositif de sécurisation d'un dispositif de répartition de commande de freinage**
Sicherungsvorrichtung einer Vorrichtung zur Bremssteuerungsverteilung
Device for securing a device for distributing brake control

(30) Priorité: 20.04.2011 FR 1153411
(43) Date de publication de la demande: 24.10.2012
(73) Titulaire: Renault S.A.S., 92100 Boulogne-Billancourt (FR)
(72) Inventeur: Azzi, Hamid, 78310 MAUREPAS (FR); Dumas, Philippe, 78750 MAREIL-MARLY (FR); De Branche, Basile, 75017 PARIS (FR)

(56) Documents cités:
- DE-A1-102005 059 373
- DE-A1-102007 000 180
- US-A1- 2008 100 131

## Description

La présente invention concerne un dispositif de répartition de commande de freinage et particulièrement un dispositif de sécurisation permettant de sécuriser le fonctionnement de ce dispositif de répartition.

Des dispositifs de répartition de commande de freinage connues dans l'état de la technique sont décrits dans les documents DE 10 2005 059373 A1, US 2008/100131 A1, DE 10 2007 000180 A1.

Il est proposé un dispositif de sécurisation d'un dispositif de répartition d'une commande de freinage globale entre une commande de freinage électrique pour un moyen de freinage électrique et une commande de freinage complémentaire pour un moyen de freinage complémentaire, comprenant un module de détection du sous-freinage apte à estimer une différence entre la commande de freinage globale et la commande de freinage complémentaire et à vérifier qu'une valeur fonction de cette différence est supérieure à un seuil de sous-freinage, et un premier moyen d'émission apte à émettre une première alarme, lorsque cette vérification est négative.

La valeur comparée au seuil de sous-freinage peut être par exemple la différence estimée, ou bien encore une valeur absolue de cette différence.

Selon une autre caractéristique de l'invention, le premier moyen d'émission peut être apte à émettre la première alarme, lorsque cette vérification reste négative pendant au moins une durée de sous-freinage.

Selon une autre caractéristique de l'invention, le dispositif de sécurisation peut comprendre en outre un module de détection du sur-freinage apte à estimer une différence entre la commande de freinage globale et la commande de freinage complémentaire et à vérifier qu'une valeur fonction de cette différence est inférieure à un seuil de sur-freinage et un deuxième moyen d'émission apte à émettre une deuxième alarme, lorsque la vérification est négative.

Par exemple, la valeur comparée au seuil de sous-freinage peut être par exemple cette différence estimée, une valeur absolue de cette différence, ou bien encore cette différence augmentée d'une valeur de commande de freinage de substitution du dispositif de répartition.

Selon une autre caractéristique de l'invention, le deuxième moyen d'émission peut être apte à émettre la deuxième alarme, lorsque la vérification reste négative pendant au moins une durée de sur-freinage.

Selon une autre caractéristique de l'invention, le dispositif peut comprendre en outre un premier saturateur saturant la commande de freinage électrique, par une première valeur minimale et une première valeur maximale.

Selon une autre caractéristique de l'invention, le dispositif peut comprendre en outre un troisième moyen d'émission apte à émettre une troisième alarme lorsque le premier saturateur se déclenche.

Selon une autre caractéristique de l'invention, le dispositif peut comprendre en outre un deuxième saturateur saturant la commande de freinage électrique réalisée par le moyen de freinage électrique, par une deuxième valeur minimale et une deuxième valeur maximale.

Selon une autre caractéristique de l'invention, le dispositif peut comprendre en outre un quatrième moyen d'émission apte à émettre une quatrième alarme lorsque le deuxième saturateur se déclenche.

Selon une autre caractéristique de l'invention, le dispositif peut comprendre en outre un troisième saturateur saturant la commande de freinage de substitution, par une troisième valeur minimale et une troisième valeur maximale.

Selon une autre caractéristique de l'invention, le dispositif peut comprendre en outre un cinquième moyen d'émission apte à émettre une cinquième alarme lorsque le troisième saturateur se déclenche.

Il est également proposé un procédé de sécurisation d'un dispositif de répartition d'une commande de freinage globale entre une commande de freinage électrique pour un moyen de freinage électrique et une commande de freinage complémentaire pour un moyen de freinage complémentaire, comprenant
- une étape de détection du sous-freinage consistant à estimer une différence entre la commande de freinage globale et la commande de freinage complémentaire et à vérifier qu'une valeur fonction de cette différence est supérieure à un seuil de sous-freinage et
- une étape d'émission d'une première alarme, lorsque cette vérification est négative.

Ce procédé peut être implémenté dans le dispositif décrit ci-dessus. L'alarme peut simplement comprendre un signal électrique, de sorte que ce procédé peut être mis en oeuvre dans des moyens de traitement de type processeur, par exemple un microcontrôleur ou autre. Il est également proposé un programme d'ordinateur comportant des instructions pour exécuter ces étapes lorsque ce programme est exécuté par des moyens de traitement de type processeur.

D'autres caractéristiques, détails et avantages de l'invention ressortiront plus clairement de la description détaillée donnée ci-après à titre indicatif en relation avec des dessins sur lesquels :
- la figure 1 présente un schéma d'un dispositif de répartition,
- la figure 2 présente sur ce schéma des exemples d'interfaces du dispositif de sécurisation,
- la figure 3 illustre un exemple de surveillance du sous-freinage,
- la figure 4 illustre un exemple de surveillance du sur-freinage,
- la figure 5 illustre un exemple de surveillance/saturation de la commande de freinage électrique,
- la figure 6 illustre un exemple de surveillance/saturation de la commande de freinage électrique réalisée,
- la figure 7 illustre un exemple de surveillance/saturation de la commande de freinage de substitution.

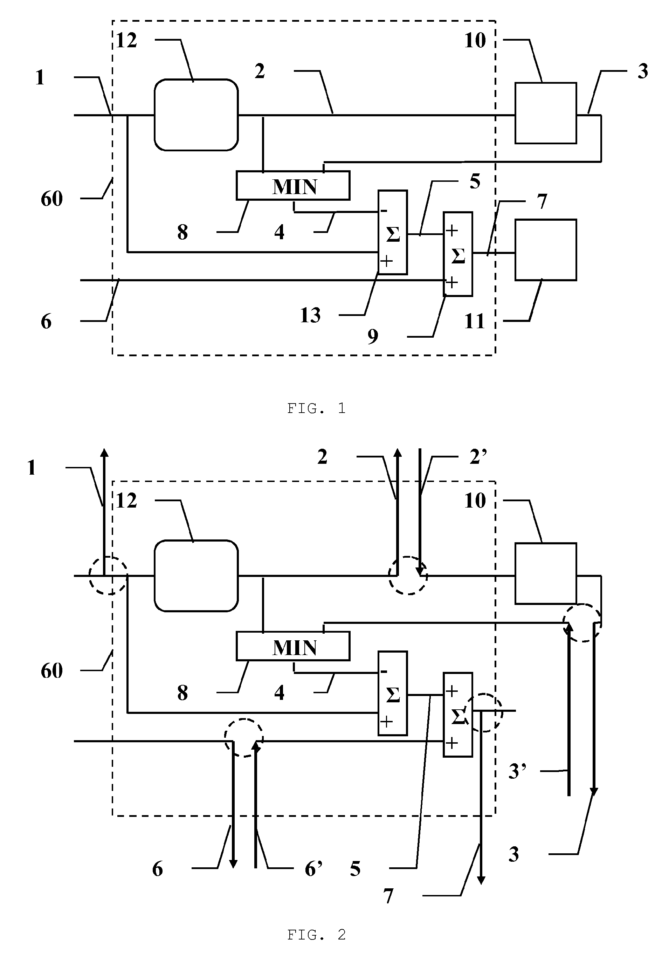

La figure 1 présente un mode de réalisation d'un dispositif de répartition de freinage 60, candidat à être sécurisé par un dispositif de sécurisation selon un mode de réalisation de l'invention.

Un tel dispositif de répartition de freinage 60 fait l'objet d'un autre brevet co-pendant du même demandeur, déposé le même jour que la présente demande, auquel on peut se référer avec profit.

Sur un véhicule électrique, il est possible, sous certaines conditions, d'utiliser le moteur électrique comme générateur et d'obtenir ainsi un moyen de freinage électrique 10. Une telle utilisation n'est pas possible en permanence et il convient d'adjoindre un moyen de freinage complémentaire 11. Un dispositif de répartition de freinage 60, peut être intercalé entre la pédale de frein, qui est alors découplée, et les différents moyens de freinage 10, 11. Ce dispositif de répartition permet à partir d'une commande de freinage globale 1, correspondant à la volonté de freinage d'un conducteur, de déterminer une commande de freinage électrique 2 destinée au moyen de freinage électrique 10 et une commande de freinage complémentaire 5 destinée au moyen de freinage complémentaire 11.

La ou les stratégies qui président à la répartition peuvent être complexes et/ou nécessiter de nombreux composants. Ceci augmente le risque de défaillance. S'agissant du freinage, qui est une fonction critique de sécurité, il convient d'améliorer la sécurité de la fonction. Le dispositif de sécurisation décrit participe de cette amélioration.

Le dispositif de répartition et le dispositif de sécurisation peuvent être réalisés selon différentes technologies. Il est possible de réaliser les différents modules et composants décrits plus avant mécaniquement, hydrauliquement, électroniquement, informatiquement, etc. ou selon toute combinaison de ces technologies. Aussi la description qui suit est donnée de manière fonctionnelle, l'homme du métier sachant adapter les enseignements donnés à la (ou les) technologie(s) de son choix.

Par exemple, tout ou partie des commandes de freinage décrites ci-dessous peuvent être des signaux électriques.

Toutes les commandes de freinage correspondent à des couples résistants, donc négatifs. Cependant afin de simplifier la description et sa compréhension, par convention, toutes les commandes de freinage sont exprimées par des valeurs positives.

Toujours en référence à la figure 1, est décrit le principe du dispositif de répartition 60. Une commande de freinage globale 1 est reçue en entrée. Un module calculateur 12 applique une stratégie pour produire une commande de freinage électrique 2.

La stratégie peut correspondre à une fonction identité, ou bien à des fonctions plus élaborées. Par exemple, le module calculateur 12 peut comprendre un module calibreur apte à réaliser un calibrage selon un profil y = x pour x<x1 et y = x1 pour x supérieur ou égal à x1, et éventuellement un module modulateur apte à moduler la commande de freinage par une valeur fonction de la vitesse du véhicule, un module désactivateur pour désactiver ou activer la commande de freinage, et un module de filtrage de la commande de freinage. Le module calculateur 12 peut aussi être agencé pour minorer sa sortie par une valeur d'un indicateur de stabilité, afin d'éviter d'appliquer une commande de freinage qui risquerait de conduire à un blocage des roues.

La commande de freinage électrique 2 est appliquée au moyen de freinage électrique 10 qui réalise effectivement une commande de freinage électrique réalisée 3.

Afin de réaliser la commande de freinage globale 1 souhaitée, le dispositif de répartition 60 détermine encore une commande de freinage complémentaire 5. Cette commande de freinage complémentaire 5 est déterminée pour compléter une commande de freinage électrique secondaire 4 pour atteindre la commande de freinage globale 1. Ce complément est déterminé au moyen d'un soustracteur 13.

La commande de freinage électrique secondaire 4 est une fonction de la commande de freinage électrique 2, de la commande de freinage électrique réalisée 3 ou des deux. Elle peut être égale à la commande de freinage électrique 2. Elle peut encore être égale à la commande de freinage électrique réalisée 3. Comme illustré sur la figure 1, elle peut encore être égale au minimum 8 de la commande de freinage électrique 2 et de la commande de freinage électrique réalisée 3.

La commande de freinage complémentaire 5 est destinée au moyen de freinage complémentaire 11 auquel elle peut être directement appliquée.

Afin de pouvoir réaliser l'équivalent d'un freinage moteur tel qu'obtenu avec un moteur thermique, il peut être déterminé, selon un mode de réalisation optionnel, une commande de freinage dite de substitution 6. Cette commande 6 peut être élaborée par un module non représenté de freinage hydraulique de substitution au frein moteur pour simuler le frein moteur additionnel dans des situations où l'énergie ne peut être récupérée. Ce module permet d'élaborer une commande de freinage de substitution 6 qui correspond à la quantité de décélération non réalisable par le système de traction électrique ou hybride. Cette commande 6 permet ainsi d'assurer un frein moteur répétable quelle que soit la situation.

Cette commande de freinage de substitution 6, est destinée au moyen de freinage complémentaire 11. Cette commande de freinage de substitution 6, si elle est présente, est ajoutée à la commande de freinage complémentaire 5 produite par le dispositif de répartition 60. Pour cela, comme illustré à la figure 1, le dispositif de répartition 60 comprend un module sommateur 9 qui ajoute la commande de freinage complémentaire 5 et la commande de freinage de substitution 6 pour produire une nouvelle commande de freinage complémentaire 7. C'est cette nouvelle commande de freinage complémentaire 7 qui est alors appliquée au moyen de freinage complémentaire 11.

Le principe du dispositif de sécurisation est d'observer les variations de certaines des variables traitées par le dispositif de répartition 60 afin de détecter des anomalies. Le cas échéant, en fonction de l'observation, ces variables pourront être modifiées par le dispositif de sécurisation, afin par exemple de limiter l'étendue d'une variation.

La figure 2 montre, sur un schéma repris de la figure 1, les zones (cercles pointillés) où le dispositif de répartition 60 peut être modifié, et la manière dont ce dispositif peut être modifié, afin d'interfacer un dispositif de sécurisation.

Dans le cas d'une variable que l'on souhaite uniquement observer, un « piquage » recopie cette variable. C'est le cas pour la commande de freinage globale 1 et la commande de freinage complémentaire 7.

Dans le cas d'une variable que l'on souhaite observer et éventuellement modifier, une connexion est interrompue. Il est alors réalisé une dérivation de la variable X vers le dispositif de sécurisation. La variable modifiée X' par le dispositif de sécurisation est ensuite réinjectée en lieu et place de la variable X. C'est le cas pour la commande de freinage électrique 2, en amont du dispositif de sécurisation et pour la commande de freinage électrique 2' modifiée, en aval du dispositif de sécurisation. Il en est de même pour la commande de freinage électrique réalisée 3, en amont du dispositif de sécurisation et pour la commande de freinage électrique réalisée 3' modifiée, en aval du dispositif de sécurisation. Il en est de même pour la commande de freinage de substitution 6, en amont du dispositif de sécurisation et pour la commande de freinage de substitution 6' modifiée, en aval du dispositif de sécurisation.

La sécurisation du dispositif de répartition 60 est réalisée au moyen de modules additionnels 61-65, qui vont maintenant être décrits en détail. Chaque module additionnel 61-65 est indépendant d'une part du dispositif de répartition, en ce qu'il utilise des composants séparés, et d'autre part des autres modules de sécurisation. Ainsi chaque module additionnel 61-65 peut ou non être présent, seul ou selon toutes les combinaisons possibles de modules 61-65. Chaque module additionnel améliorant la sécurité, un mode de réalisation préférentiel comprend tous les modules additionnels 61-65 décrits.

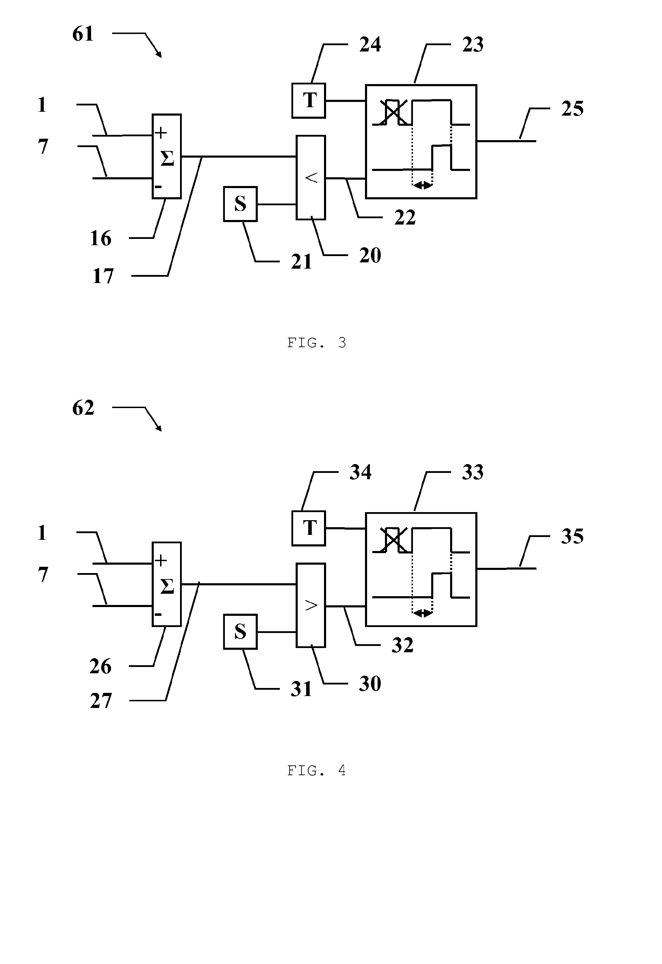

En référence à la figure 3, un module qui peut être inclus dans le dispositif de sécurisation est un module 61 de détection du sous-freinage. Un tel module 61 comprend un soustracteur 16 apte à déterminer un signal différence 17 entre la commande de freinage globale 1 et la commande de freinage complémentaire 7. Ce signal différence 17 est ensuite comparé par un comparateur 20 à une valeur seuil de sous-freinage 21. Le signal différence 17 doit normalement être supérieur au seuil 21. Si ce n'est pas le cas un signal d'alarme 22 est émis.

Selon un mode de réalisation, le seuil de sous-freinage 21 est pris égal à -3 m.s⁻², cette valeur de seuil correspondant à des valeurs de commande négatives.

Afin de limiter les déclenchements intempestifs et vérifier que le sous-freinage est bien effectif, il peut encore n'être émis une alarme 25 que si la condition d'alarme précédente 22 se maintient pendant au moins une durée de sous-freinage 24. Ce maintien est déterminé par un bloc 23 qui émet alors, le cas échéant, une alarme 25.

Selon un mode de réalisation, la durée de sous-freinage 24 est prise égale à 30 ms.

En référence à la figure 4, un autre module qui peut être inclus dans le dispositif de sécurisation est un module 62 de détection du sur-freinage. Un tel module 62 comprend un soustracteur 26 apte à déterminer une différence 27 entre la commande de freinage globale 1 et la commande de freinage complémentaire 7. Cette différence 27 est ensuite comparée par un comparateur 30 à une valeur seuil de sur-freinage 31. Le signal 27 doit normalement être inférieur à ce seuil 31. Si ce n'est pas le cas un signal d'alarme 32 est émis.

Selon un mode de réalisation, le seuil de sur-freinage 31 est pris égal à 1 m.s⁻².

Afin de limiter les déclenchements intempestifs et vérifier que le sur-freinage est bien effectif, il peut encore n'être émis une alarme 35 que si la condition d'alarme précédente 32 se maintient pendant au moins une durée de sur-freinage 34. Ce maintien est déterminé par un bloc 33 qui émet alors, le cas échéant, une alarme 35.

Selon un mode de réalisation, la durée de sur-freinage 34 est prise égale à 30 ms.

En variante, on pourrait prévoir d'effectuer un piquage de la commande de freinage complémentaire 5.

Dans ce cas, le module de détection du sous-freinage 61 peut rester inchangé, à ceci prés que c'est la commande 5 qui est reçue à la place de la commande 7.

En revanche, le module de détection du sur-freinage 62 peut être modifié de façon à recevoir en outre en entrée la valeur de commande de substitution 6. Le module de détection du sur-freinage peut comprendre en outre un sommateur recevant en entrée cette commande 6 et la différence 27 (elle-même fonction des commandes 1 et 5), pour produire un signal somme. C'est ce signal somme qui est reçu en entrée du comparateur.

Les deux modules précédents 61, 62, sont uniquement observateurs. Ces modules 61, 62 ne nécessitent que des piquages/recopies des grandeurs qu'ils surveillent : commande de freinage globale 1, commande de freinage complémentaire 5 ou 7, éventuellement commande de freinage de substitution 6. Ces modules 61, 62 n'interviennent pas directement sur le fonctionnement du dispositif de répartition 60. L'alarme 22, 32, 25, 35 éventuellement émise, peut cependant être utilisée pour inhiber tout ou partie du fonctionnement du dispositif de répartition 60.

On peut relever que ces modules 61, 62 ne prennent pas en compte la commande de freinage électrique 2. Cette commande 2 pouvant être élaborée de façon relativement complexe, les modules 61, 62 peuvent ainsi rester de conception relativement simple.

On notera également ces modules 61, 62 ne prennent pas en compte la commande de freinage réalisée 3, permettant ainsi d'éviter de prendre en compte les regards introduits par les échanges avec le moteur.

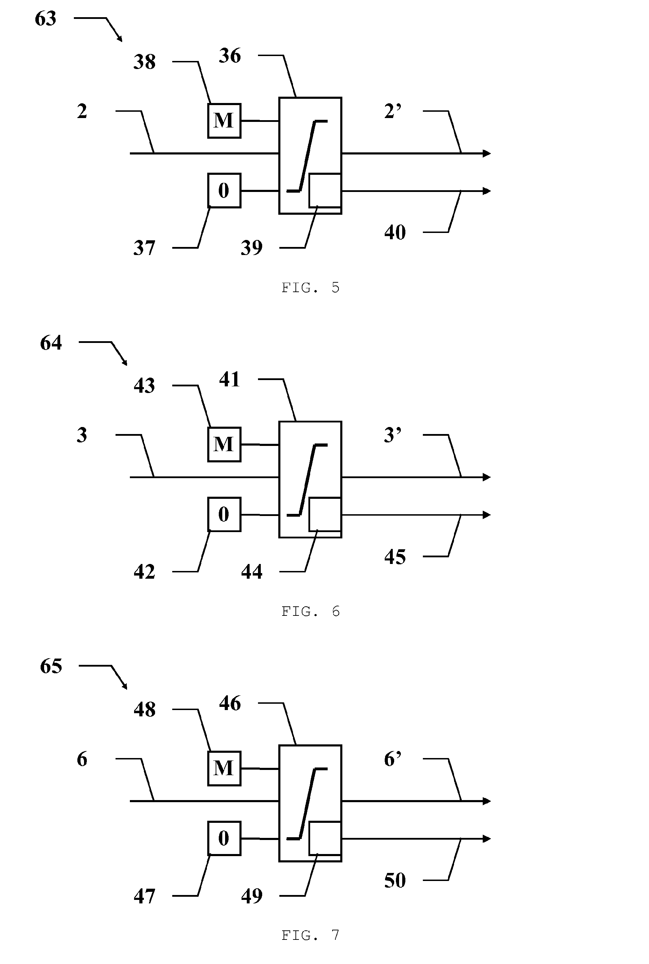

En référence à la figure 5, un autre module qui peut être inclus dans le dispositif de sécurisation est un module de surveillance 63 des variations de la commande de freinage électrique 2. Un tel module de surveillance 63 est disposé en dérivation du dispositif de répartition 60. Une transmission de la commande de freinage électrique 2 est interrompue. La commande de freinage électrique 2 est redirigée vers le module de surveillance 63. La commande de freinage électrique modifiée 2' par le module de surveillance 63 est réinjectée dans le dispositif de répartition 60 en lieu et place de la commande de freinage électrique 2 initiale. Le module de surveillance 63 de la commande de freinage électrique 2 comprend un saturateur 36 ou tout autre composant capable de comparer la commande de freinage électrique 2 reçue en entrée avec deux bornes min 37 et max 38.

Un premier mode d'action du module de surveillance 63 consiste à saturer la commande de freinage électrique 2 à la valeur max 38 si elle venait à lui être supérieure, et à la valeur min 37 si elle venait à lui être inférieure. Ainsi la commande de freinage électrique modifiée 2' est égale à :
- la valeur min 37 si la commande de freinage électrique 2 est inférieure à cette valeur min 37,
- la valeur max 38 si la commande de freinage électrique 2 est supérieure à cette valeur max 38,
- la commande de freinage électrique 2 sinon, soit lorsque la commande de freinage électrique 2 est comprise entre la valeur min 37 et la valeur max 38.

Ceci permet d'éviter des excursions trop importantes de la commande de freinage électrique 2, 2', y compris en cas de défaillance d'un composant de détermination de cette commande de freinage électrique 2, et ainsi limiter les conséquences néfastes d'une telle défaillance.

Selon ce premier mode d'action, le module de surveillance 63 s'intercale dans le dispositif de répartition 60 et modifie la commande de freinage électrique 2 pour la remplacer par une commande de freinage électrique modifiée 2'.

Un second mode d'action du module de surveillance 63 consiste à détecter que le saturateur 36 se déclenche. Ceci revient à détecter que la commande de freinage électrique 2 dépasse de sa borne min 37 ou de sa borne max 38. Un moyen d'émission 39 est apte à émettre une alarme 40 si un dépassement est détecté. Le moyen d'émission 39 peut être configuré pour réagir à un dépassement d'une seule des bornes min 37 ou max 38. Le moyen 39 peut encore être configuré pour réagir à un dépassement d'une des deux bornes min 37 et max 38.

Selon ce second mode d'action, le module de surveillance 63 est uniquement observateur et ne nécessite qu'un piquage/recopie de la grandeur qu'il surveille. Le module de surveillance 63 n'intervient pas directement sur le fonctionnement du dispositif de répartition 60. L'alarme 40 éventuellement déclenchée, peut cependant être utilisée pour inhiber tout ou partie du fonctionnement du dispositif de répartition 60.

Le premier et le deuxième mode d'action sont indépendants. Le module de surveillance 63 peut être utilisé selon le premier mode d'action, selon le deuxième mode ou selon les deux conjointement.

La commande de freinage électrique 2 est une commande en couple. Sa borne max 38 est déterminée en fonction d'une estimation de sa valeur maximale possible en fonctionnement normal. Le couple de freinage ne doit pas en fonctionnement normal changer de signe. La borne min 37 peut être prise égale à zéro.

En référence à la figure 6, un autre module qui peut être inclus dans le dispositif de sécurisation est un module de surveillance 64 des variations de la commande de freinage électrique réalisée 3. Un tel module de surveillance 64 est disposé en dérivation du dispositif de répartition 60. Une transmission de la commande de freinage électrique réalisée 3 est interrompue. La commande de freinage électrique réalisée 3 est redirigée vers le module de surveillance 64. La commande de freinage électrique réalisée modifiée 3' par le module de surveillance 64 est réinjectée dans le dispositif de répartition 60 en lieu et place de la commande de freinage électrique réalisée 3 initiale. Le module de surveillance 64 de la commande de freinage électrique réalisée 3 comprend un saturateur 41 ou tout autre composant capable de comparer la commande de freinage électrique réalisée 3 reçue en entrée avec deux bornes min 42 et max 43.

Un premier mode d'action du module de surveillance 64 consiste à saturer la commande de freinage électrique réalisée 3 à la valeur max 43 si elle venait à lui être supérieure, et à la valeur min 42 si elle venait à lui être inférieure. Ainsi la commande de freinage électrique réalisée modifiée 3' est égale à :
- la valeur min 42 si la commande de freinage électrique réalisée 3 est inférieure à cette valeur min 42,
- la valeur max 43 si la commande de freinage électrique réalisée 3 est supérieure à cette valeur max 43,
- la commande de freinage électrique réalisée 3 sinon, soit lorsque la commande de freinage électrique réalisée 3 est comprise entre la valeur min 42 et la valeur max 43.

Ceci permet d'éviter des excursions trop importantes de la commande de freinage électrique réalisée 3, 3', y compris en cas de défaillance d'un composant de détermination de la commande de freinage électrique réalisé 3, et ainsi limiter les conséquences néfastes d'une telle défaillance.

Selon ce premier mode d'action, le module de surveillance 64 s'intercale dans le dispositif de répartition 60 et modifie la commande de freinage électrique réalisée 3 pour la remplacer par une commande de freinage électrique réalisée modifiée 3'.

Un second mode d'action du module de surveillance 64 consiste à détecter que le saturateur 41 se déclenche. Ceci revient à détecter que la commande de freinage électrique réalisée 3 dépasse de sa borne min 42 ou de sa borne max 43. Un moyen d'émission 44 est apte à émettre une alarme 45 si un dépassement est détecté. Le moyen d'émission 44 peut être configuré pour réagir à un dépassement d'une seule des bornes min 42 ou max 43. Le moyen d'émission 44 peut encore être configuré pour réagir à un dépassement d'une des deux bornes min 42 et max 43.

Selon ce second mode d'action, le module de surveillance 64 est uniquement observateur et ne nécessite qu'un piquage/recopie de la grandeur qu'il surveille. Le module de surveillance 64 n'intervient pas directement sur le fonctionnement du dispositif de répartition 60. L'alarme 45 éventuellement déclenchée, peut cependant être utilisée pour inhiber tout ou partie du fonctionnement du dispositif de répartition 60. On peut ainsi passer dans un mode de fonctionnement entièrement hydraulique, sans répartition.

Le premier et le deuxième modes d'action sont indépendants. Le module de surveillance 64 peut être utilisé selon le premier mode d'action, selon le deuxième mode ou selon les deux conjointement.

La commande de freinage électrique réalisée 3 est une commande en couple. Sa borne max 43 est déterminée en fonction d'une estimation de sa valeur maximale possible en fonctionnement normal. Le couple de freinage ne doit pas en fonctionnement normal changer de signe. La borne min 42 peut être prise égale à zéro.

En référence à la figure 7, un autre module qui peut être inclus dans le dispositif de sécurisation est un module de surveillance 65 des variations de la commande de freinage de substitution 6. Un tel module de surveillance 65 est disposé en dérivation du dispositif de répartition 60. Une transmission de la commande de freinage de substitution 6 est interrompue. La commande de freinage de substitution 6 est redirigée vers le module de surveillance 65. La commande de freinage de substitution modifiée 6' par le module de surveillance 65 est réinjectée dans le dispositif de répartition 60 en lieu et place de la commande de freinage de substitution 6 initiale. Le module de surveillance 65 de la commande de freinage de substitution 6 comprend un saturateur 46 ou tout autre composant capable de comparer la commande de freinage de substitution 6 reçue en entrée avec deux bornes min 47 et max 48.

Un premier mode d'action du module de surveillance 65 consiste à saturer la commande de freinage de substitution 6 à la valeur max 48 si elle venait à lui être supérieure, et à la valeur min 47 si elle venait à lui être inférieure. Ainsi la commande de freinage de substitution modifiée 6' est égale à :
- la valeur min 47 si la commande de freinage de substitution 6 est inférieure à cette valeur min 47,
- la valeur max 48 si la commande de freinage de substitution 6 est supérieure à cette valeur max 48,
- la commande de freinage de substitution 6 sinon, soit lorsque la commande de freinage de substitution 6 est comprise entre la valeur min 47 et la valeur max 48.

Ceci permet d'éviter des excursions trop importantes de la commande de freinage de substitution 6, 6', y compris en cas de défaillance d'un composant de détermination de la commande de freinage de substitution 6, et ainsi limiter les conséquences néfastes d'une telle défaillance.

Selon ce premier mode d'action, le module de surveillance 65 s'intercale dans le dispositif de répartition 60 et modifie la commande de freinage de substitution 6 pour la remplacer par une commande de freinage de substitution modifiée 6'.

Un second mode d'action du module de surveillance 65 consiste à détecter que le saturateur 46 se déclenche. Ceci revient à détecter que la commande de freinage de substitution 6 dépasse de sa borne min 47 ou de sa borne max 48. Un moyen d'émission 49 est apte à émettre une alarme 50 si un dépassement est détecté. Le moyen d'émission 49 peut être configuré pour réagir à un dépassement d'une seule des bornes min 47 ou max 48. Le moyen d'émission 49 peut encore être configuré pour réagir à un dépassement d'une des deux bornes min 47 et max 48.

Selon ce second mode d'action, le module de surveillance 65 est uniquement observateur et ne nécessite qu'un piquage/recopie de la grandeur qu'il surveille. Le module de surveillance 65 n'intervient pas directement sur le fonctionnement du dispositif de répartition 60. L'alarme 50 éventuellement déclenchée, peut cependant être utilisée pour inhiber tout ou partie du fonctionnement du dispositif de répartition 60.

Le premier et le deuxième modes d'action sont indépendants. Le module de surveillance 65 peut être utilisé selon le premier mode d'action, selon le deuxième mode ou selon les deux conjointement.

La commande de freinage de substitution 6 est une commande en couple. Sa borne max 48 est déterminée en fonction d'une estimation de sa valeur maximale possible en fonctionnement normal. Le couple de freinage ne doit pas en fonctionnement normal changer de signe. La borne min 47 peut être prise égale à zéro.

En variante, les commandes de freinage peuvent correspondre à des pressions de consigne. Cette variante est relativement simple à réaliser dans la mesure où couples et pressions de consignes sont proportionnels.

Dans la présente demande, l'expression « premier élément» n'implique pas forcément l'existence d'un ou plusieurs éléments supplémentaires. Les termes « premier », « deuxième, « troisième » etc. servent seulement à différencier les éléments les uns des autres.

Ainsi, l'invention n'est en rien limitée par la présence d'un deuxième moyen d'émission, d'un troisième moyen d'émission etc. Le dispositif peut par exemple comprendre seulement deux moyens d'émission, le premier moyen d'émission et le quatrième moyen d'émission, et être dénué des deuxième, troisième et cinquième moyens d'émission.

De la même façon, le dispositif peut comprendre un seul ou plusieurs saturateurs.

## Revendications

1. Dispositif de sécurisation d'un dispositif de répartition (60) d'une commande de freinage globale (1) entre une commande de freinage électrique (2) pour un moyen de freinage électrique (10) et une commande de freinage complémentaire (7) pour un moyen de freinage complémentaire (11), ***caractérisé en ce qu'il*** comprend un module (61) de détection du sous-freinage apte à estimer une différence (17) entre la commande de freinage globale (1) et la commande de freinage complémentaire (7) et à vérifier qu'une valeur fonction de ladite différence est supérieure à un seuil de sous-freinage (21) et un premier moyen d'émission (20, 23) apte à émettre une première alarme (22, 25), lorsque ladite vérification est négative.

2. Dispositif selon la revendication 1, dans lequel le premier moyen d'émission (20, 23) est agencé pour émettre la première alarme (25), lorsque ladite vérification reste négative pendant au moins une durée de sous-freinage (24).

3. Dispositif selon la revendication 1 ou 2, dans lequel le dispositif de sécurisation comprend en outre un module (62) de détection du sur-freinage apte à estimer une différence (27) entre la commande de freinage globale (1) et la commande de freinage complémentaire (7) et à vérifier qu'une valeur fonction de ladite différence est inférieure à un seuil de sur-freinage (31) et un deuxième moyen d'émission (30, 33) apte à émettre une deuxième alarme (32, 35), lorsque ladite vérification est négative.

4. Dispositif selon la revendication 3, dans lequel le deuxième moyen d'émission (30, 33) est agencé pour émettre la deuxième alarme (35), lorsque ladite vérification reste négative pendant au moins une durée de sur-freinage (34).

5. Dispositif selon l'une quelconque des revendications 1 à 4, comprenant en outre un premier saturateur (36) saturant la commande de freinage électrique (2), par une première valeur minimale (37) et une première valeur maximale (38).

6. Dispositif selon les revendications 4 et 5, comprenant en outre un troisième moyen d'émission (39) apte à émettre une troisième alarme (40) lorsque le premier saturateur (36) se déclenche.

7. Dispositif selon la revendication 5, comprenant en outre un deuxième saturateur (41) saturant une commande de freinage électrique réalisée (3) par le moyen de freinage électrique (10), par une deuxième valeur minimale (42) et une deuxième valeur maximale (43).

8. Dispositif selon la revendication 6, comprenant en outre un quatrième moyen d'émission (44) apte à émettre une quatrième alarme (45) lorsque le deuxième saturateur (41) se déclenche.

9. Dispositif selon la revendication 7, comprenant en outre un troisième saturateur (46) saturant une commande de freinage de substitution (6), par une troisième valeur minimale (47) et une troisième valeur maximale (48).

10. Dispositif selon les revendications 8 et 9, comprenant en outre un cinquième moyen d'émission (49) apte à émettre une cinquième alarme (50) lorsque le troisième saturateur (46) se déclenche.

11. Procédé de sécurisation d'un dispositif de répartition (60) d'une commande de freinage globale (1) entre une commande de freinage électrique (2) pour un moyen de freinage électrique (10) et une commande de freinage complémentaire (7) pour un moyen de freinage complémentaire (11), comprenant
une étape de détection du sous-freinage consistant à estimer une différence entre la commande de freinage globale (1) et la commande de freinage complémentaire (5) et à vérifier qu'une valeur fonction de ladite différence est supérieure à un seuil de sous-freinage (21) et
une étape d'émission d'une première alarme (22, 25), lorsque ladite vérification est négative.

## Patentansprüche

1. Sicherungsvorrichtung einer Vorrichtung zur Verteilung (60) einer globalen Bremssteuerung (1) zwischen einer elektrischen Bremssteuerung (2) für ein elektrisches Bremsmittel (10) und einer ergänzenden Bremssteuerung (7) für ein ergänzendes Bremsmittel (11), **dadurch gekennzeichnet, dass** sie ein Modul (61) zur Erkennung der Unterbremsung, das in der Lage ist, einen Unterschied (17) zwischen der globalen Bremssteuerung (1) und der ergänzenden Bremssteuerung (7) zu schätzen und zu prüfen, ob ein von dem genannten Unterschied abhängiger Wert über einem Unterbremsungsschwellwert (21) liegt, und ein erstes Sendemittel (20, 23), das in der Lage ist, einen ersten Alarm (22, 25) zu senden, wenn die genannte Prüfung negativ ist, umfasst.

2. Vorrichtung nach Anspruch 1, bei der das erste Sendemittel (20, 23) ausgebildet ist, um den ersten Alarm (25) zu senden, wenn die genannte Prüfung während mindestens einer Unterbremsungsdauer (24) negativ bleibt.

3. Vorrichtung nach Anspruch 1 oder 2, bei der die Sicherungsvorrichtung darüber hinaus ein Modul (62) zur Erkennung der Überbremsung, das in der Lage ist, einen Unterschied (27) zwischen der globalen Bremssteuerung (1) und der ergänzenden Bremssteuerung (7) zu schätzen und zu prüfen, ob ein von dem genannten Unterschied abhängiger Wert unter einem Überbremsungsschwellwert (31) liegt, und ein zweites Sendemittel (30, 33), das in der Lage ist, einen zweiten Alarm (32, 35) zu senden, wenn die genannte Prüfung negativ ist, umfasst.

4. Vorrichtung nach Anspruch 3, bei der das zweite Sendemittel (30, 33) ausgebildet ist, um den zweiten Alarm (35) zu senden, wenn die genannte Prüfung während mindestens einer Überbremsungsdauer (34) negativ bleibt.

5. Vorrichtung nach einem der Ansprüche 1 bis 4, umfassend darüber hinaus einen ersten Sättiger (36), der die elektrische Bremssteuerung (2), durch einen ersten Mindestwert (37) und einen ersten Höchstwert (38), sättigt.

6. Vorrichtung nach Anspruch 4 und 5, umfassend darüber hinaus ein drittes Sendemittel (39), das in der Lage ist, einen dritten Alarm (40) zu senden, wenn der erste Sättiger (36) auslöst.

7. Vorrichtung nach Anspruch 5, umfassend darüber hinaus einen zweiten Sättiger (41), der eine durch das elektrische Bremsmittel (10) realisierte elektrische Bremssteuerung (3), durch einen zweiten Mindestwert (42) und einen zweiten Höchstwert (43), sättigt.

8. Vorrichtung nach Anspruch 6, umfassend darüber hinaus ein viertes Sendemittel (44), das in der Lage ist, einen vierten Alarm (45) zu senden, wenn der zweite Sättiger (41) auslöst.

9. Vorrichtung nach Anspruch 7, umfassend darüber hinaus einen dritten Sättiger (46), der eine Ersatz-Bremssteuerung (6), durch einen dritten Mindestwert (47) und einen dritten Höchstwert (48), sättigt.

10. Vorrichtung nach Anspruch 8 und 9, umfassend darüber hinaus ein fünftes Sendemittel (49), das in der Lage ist, einen fünften Alarm (50) zu senden, wenn der dritte Sättiger (46) auslöst.

11. Verfahren zur Sicherung einer Vorrichtung zur Verteilung (60) einer globalen Bremssteuerung (1) zwischen einer elektrischen Bremssteuerung (2) für ein elektrisches Bremsmittel (10) und einer ergänzenden Bremssteuerung (7) für ein ergänzendes Bremsmittel (11), umfassend
einen Schritt zur Erkennung der Unterbremsung, darin bestehend, einen Unterschied zwischen der globalen Bremssteuerung (1) und der ergänzenden Bremssteuerung (5) zu schätzen und zu prüfen, ob ein von dem genannten Unterschied abhängiger Wert über einem Unterbremsungsschwellwert (21) liegt, und
einen Schritt zum Senden eines ersten Alarms (22, 25), wenn die genannte Prüfung negativ ist.

## Claims

1. Device for improving the reliability of a distribution device (60) for distributing an overall braking command (1) between an electrical braking command (2) for an electrical braking means (10) and an additional braking command (7) for an additional braking means (11), ***characterized in that*** it comprises a detection module (61) for detecting underbraking and able to estimate a difference (17) between the overall braking command (1) and the additional braking command (7) and to check that a value dependent on the said difference is above an underbraking threshold (21), and a first emission means (20, 23) able to emit a first alarm (22, 25) when the said check proves negative.

2. Device according to Claim 1, in which the first emission means (20, 23) is designed to emit the first alarm (25) when the said check remains negative for at least an underbraking duration (24).

3. Device according to Claim 1 or 2, in which the reliability-improving device further comprises a detection module (62) for detecting overbraking and able to estimate a difference (27) between the overall braking command (1) and the additional braking command (7) and to check that a value dependent on the said difference is below an overbraking threshold (31), and a second emission means (30, 33) able to emit a second alarm (32, 35) when the said check proves negative.

4. Device according to Claim 3, in which the second emission means (30, 33) is designed to emit the second alarm (35) when the said check remains negative for at least an overbraking duration (34).

5. Device according to any one of Claims 1 to 4, further comprising a first saturator (36) saturating the electrical braking command (2) by a first minimum value (37) and a first maximum value (38).

6. Device according to Claims 4 and 5, further comprising a third emission means (39) able to emit a third alarm (40) when the first saturator (36) is triggered.

7. Device according to Claim 5, further comprising a second saturator (41) saturating an electrical braking command (3) carried out by the electrical braking means (10) by a second minimum value (42) and a second maximum value (43).

8. Device according to Claim 6, further comprising a fourth emission means (44) able to emit a fourth alarm (45) when the second saturator (41) is triggered.

9. Device according to Claim 7, further comprising a third saturator (46) saturating a substitute braking command (6) by a third minimum value (47) and a third maximum value (48).

10. Device according to Claims 8 and 9, further comprising a fifth emission means (49) able to emit a fifth alarm (50) when the third saturator (46) is triggered.

11. Method improving the reliability of a distribution device (60) for distributing an overall braking command (1) between an electrical braking command (2) for an electrical braking means (10) and an additional braking command (7) for an additional braking means (11), comprising
a step of detecting underbraking which consists in estimating a difference between the overall braking command (1) and the additional braking command (5) and in checking that a value dependent on the said difference is above an underbraking threshold (21), and a step of emitting a first alarm (22, 25) when the said check proves negative.
